# EUROPEAN PATENT SPECIFICATION

(11) **EP 4 544 942 B1**
(45) Date of publication and mention of the grant of the patent: **05.08.2026**
(21) Application number: 23210308.5
(22) Date of filing: 16.11.2023
(51) Int. Cl.: A41D 13/005, A41D 1/06, F25B 21/02

(54) **IOT-BASED COLD VEST**
IOT-BASIERTE KALTWESTE
GILET FROID BASÉ SUR L'IDO

(30) Priority: 23.10.2023 KR 20230142417
(43) Date of publication of application: 30.04.2025
(73) Proprietor: Jang Eun FNC Co., Ltd, Seoul (KR)
(72) Inventor: JANG, Eun Jeong, Seoul (KR)
(74) Representative: BCKIP Part mbB

(56) References cited:
- EP-B1- 3 760 069
- WO-A1-2022/204149
- US-A1- 2018 142 924

## Description

### CROSS REFERENCE TO RELATED APPLICATION

The present application claims priority to Korean Patent Application No. 10-2023-0142417, filed on October 23, 2023.

### BACKGROUND

### Technical Field

The present invention relates to an IoT-based cold vest.

### Description of the Related Art

Recently, devices that are coupled to clothing to make it possible to adjust temperature in accordance with the body temperature of users or external environments are releasing. However, there are few products that fundamentally satisfy convenience for activity of users, a convenient wearable feature, and convenience for washing.

In particular, since cooling temperature is set only on the basis of the body temperature of users, there is a lack of preparatory measures or post measures according to weather.

Accordingly, it is required to develop a technology for efficiently using energy, securing activity convenience and convenient wearable feature for users, and effectively keeping and transmitting coolness.

### [Prior Art Document]

### [Patent Document]

(Patent Document 1) KR 10-2415705 B1

Document US 2018 / 0 142 924 A1 discloses a protective vest and associated system. The vest includes at least one cooling subsystem configured to cool the torso of the wearer. The cooling subsystem employs a fan, a coolant bladder with nontoxic coolant, a thermoelectric module and a heat sink. A heat exchange aperture in the vest shell is enveloped by an armor shroud which also forms a fan air flow duct. The vest further includes temperature sensors and a heart rate monitor, and communicates with a wearer computing device by which the vest is controlled and the geographical position of the vest and condition of the wearer is monitored. The wearer computing device further provides real-time tactical information and vest performance data to the wearer. Multiple wearer computing devices corresponding to respective protective vests communicates with each other, or a department computing device, by way of a server.

Document EP 3 760 069 A1 discloses an electronic heating/cooling garment. The electronic heating/cooling garment includes a neck part, a collar (neckband), or an underarm part where a Peltier device is placed; and a front body or a back body where a heating medium circulation path and a battery are placed, the battery being configured to supply electric power to a pump and the Peltier device. The heating medium circulation path is composed of a flexible thermally conductive material having a tubular shape and holds a heating medium therein in an airtight manner. The heating medium circulation path has a first electrode and a second electrode on its outer surface. The first and second electrodes are configured to supply the electric power from the battery to the Peltier device and the pump.

Document WO 2022 / 204 149 A1 discloses a wearable garment, such as a vest, for providing thermal conditioning, for example cooling and/or heating, to a user. The vest is used with cryogenic temperatures. Peltier devices, pre-charged nitrogen canisters, or miniature Stirling cryo-coolers are mounted and built into the wearable or externally carried or mounted thereto. A pump, such as a vacuum diaphragm pump, causes thermally conditioned air to flow through a series of porous regenerative tubing and/or porous panels to supply conditioned air to a user of the garment. The system uses a cryocooler having a pulsating cold finger. The cryos supply -200°C gas through the panels or tubing. Portable systems can be carried or attached, such as HVAC, refrigeration, heating or the like. Control systems regulate the temperature and are adjusted by a user, for example using an input pad or a mobile device.

### SUMMARY OF THE INVENTION

An objective of the present invention is to provide an IoT-based cold vest that has a cooling unit and can effectively transmit coolness to a wearer using circulation of cooled fluid.

Another objective is to provide an IoT-based cold vest that enables temperature adjustment through both temperature adjustment by a wearer and use of weather information.

The technical subject to implement in the present invention is not limited to the technical problems described above and other technical subjects that are not stated herein will be clearly understood by those skilled in the art from the following specifications.

To this end, the present invention provides an IoT-based cold vest in accordance with claim 1. According to the present invention, an IoT-based cold vest , first, includes a clothing part configured to form one or more cooling areas with cold holders in which a plurality of flexible unit cooling modules is inserted.

Further, the IoT-based cold vest includes a controller detachably disposed on the clothing part, supplying electrical energy to the unit cooling modules, and having a communication module to control the unit cooling modules by transmitting first temperature adjustment information to the unit cooling modules.

In this configuration, the IoT-based cold vest includes a temperature collector configured to collect cooling temperature information that is transmitted to the unit cooling modules.

In this configuration, the IoT-based cold vest includes a user terminal connected to the communication module through a network and configured to collect the cooling temperature information and transmit second temperature adjustment information to the controller to control the unit cooling modules.

Further, the IoT-based cold vest includes a server connected to the user terminal through a network and configured to collect the cooling temperature information and the first temperature adjustment information and transmit third temperature adjustment information to the user terminal so that the unit cooling modules are controlled.

In this configuration, a cooling channel may be formed in the unit cooling modules, cold air generated by a Peltier element may flow through the cooling channels, and a plurality of unit cooling modules may be configured to form one cooling area.

In this configuration, the server collects the cooling temperature information of an individual wearer from the user terminal, is configured such that wearing position information, position information of a plurality cooling portions, and portion-specific cooling information are collected as the collected cooling temperature information and cooling states of respective parts of a human body are collected, and is configured to transmit the third temperature adjustment information to the user terminal on the basis of weather information, which includes temperature, humidity, and wind information at an area where a wearer is positioned that are collected from an external weather system, and the cooling temperature information.

Further, the unit cooling module may be configured such that inflow tubes guiding cold air generated by the Peltier element into the cooling channel are detachably connected to the cooling channel.

In this configuration, the cooling channel may be formed by bending one tube and may be repeatedly bent in S shapes from a side to the other side in a longitudinal going direction, whereby a line of unit cooling passages may be formed and the unit cooling passages may be continuously formed with predetermined intervals from a side to the other side in a width direction to provide a cooling area unit.

Meanwhile, the unit cooling module may be configured such that a first surface is formed toward the skin of a wearer under the cooling channel, a second surface is disposed opposite to the first surface, the temperature collector is disposed at the position of the first surface at the position of an outlet hole of the cooling channel, a plurality of cylindrical cooling protrusions is formed on the first surface, and many cooling gap spaces that are perpendicular between a wearer and the first surface are formed between the cooling protrusions.

In this configuration, a cold air inflow tube and a cold air outflow tube of a unit cooling module adjacent to any one unit cooling module may be detachably connected to each other, whereby the cooling area may be formed by the unit cooling modules; and the air inflow tube and the cold air outflow tube may be made of a flexible material so that the cooling area corresponds to a curve of a human body.

Meanwhile, a UV coating layer may be disposed on the surface of the clothing part and fine heat discharge holes may be irregularly configured at the cold holder to discharge heat that is discharged from a Peltier thermoelectric element, a human body, or the unit cooling modules.

In this configuration, a user input unit and a temperature display unit may be disposed at the controller such that when a user operates the user input unit, the first temperature adjustment information is created as input information and the unit cooling modules are controlled.

Further, the user terminal may be configured such that the cooling temperature information is shown in an installed application, and the second temperature adjustment information may be formed as information that is input into the user input unit by a user touching a screen.

Further, the server may have a model trained to extract features and the possibility of a danger of skin temperature on the basis of a temperature difference between center temperature of the front and the back of the body of a wearer and portions around the front and the back for learning data as an artificial intelligence model from which thermal pleasantness information of a human body is extracted on the basis of feature analysis of the portion-specific cooling information.

Accordingly, the present invention provides an IoT-based cold vest, so it is possible to adjust temperature through both direct operation by a wearer and previous operation through a server using cooling temperature information of the wearer and weather information around the wearer, thereby providing an effect increasing work safety and wearing pleasantness.

Further, there is an effect of increasing activity convenience for the wearer using the cooling members made of a flexible material that is convenient and light, and increasing convenience for washing through a detachable structure.

Meanwhile, the effects of the present invention are not limited to the effects described above and other effects can be clearly understood by those skilled in the art from the following description.

### BRIEF DESCRIPTION OF THE DRAWINGS

The above and other objectives, features and other advantages of the present invention will be more clearly understood from the following detailed description when taken in conjunction with the accompanying drawings, in which:
FIG. 1 is a view showing the entire configuration of an IoT-based cold vest according to a preferred embodiment of the present invention;
FIGS. 2 and 3 are views showing a unit cooling module of the IoT-based cold vest according to a preferred embodiment of the present invention;
FIGS. 4 and 5 are views showing a cooling channel of the IoT-based cold vest according to a preferred embodiment of the present invention;
FIGS. 6 and 7 are views showing a first surface of the IoT-based cold vest according to a preferred embodiment of the present invention;
FIG. 8 is a view showing a cold air inflow tube and a cold air outflow tube of the IoT-based cold vest according to a preferred embodiment of the present invention;
FIGS. 9 and 10 are views showing a UV coating layer and heat discharge holes of the IoT-based cold vest according to a preferred embodiment of the present invention; and
FIG. 11 is a view showing a controller, a temperature collector, a user terminal, and a server unit for the IoT-based cold vest according to a preferred embodiment of the present invention.

### DETAILED DESCRIPTION

Specific structural and functional description about embodiments according to the present invention disclosed herein is exemplified only to describe the embodiments according to the present invention and the embodiments according to the present invention may be implemented in various ways and are not limited to the embodiments described herein.

Embodiments described herein may be changed in various ways and various shapes, so specific embodiments are shown in the drawings and will be described in detail in this specification.

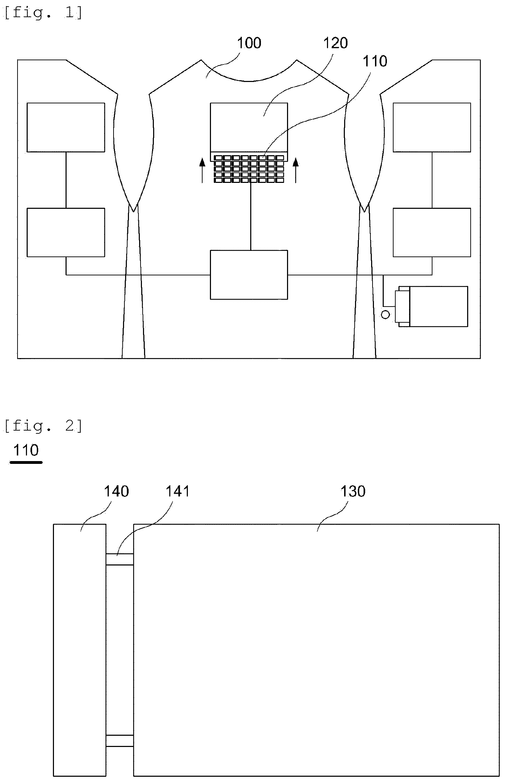

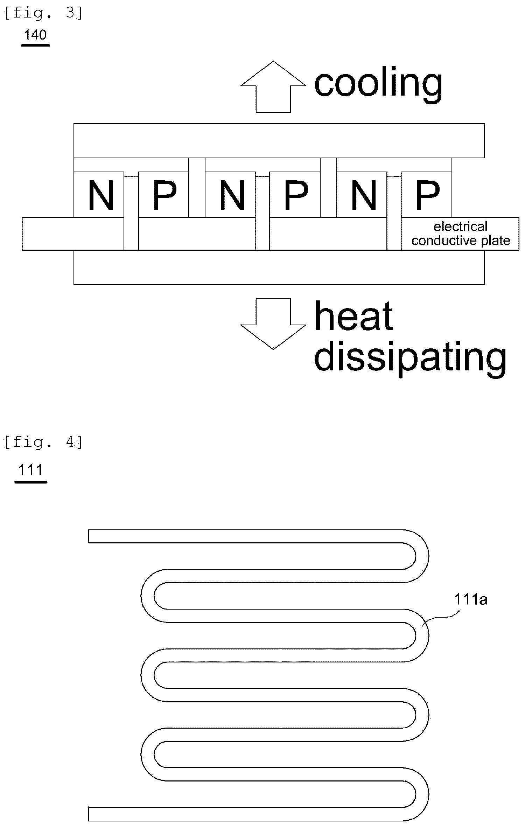

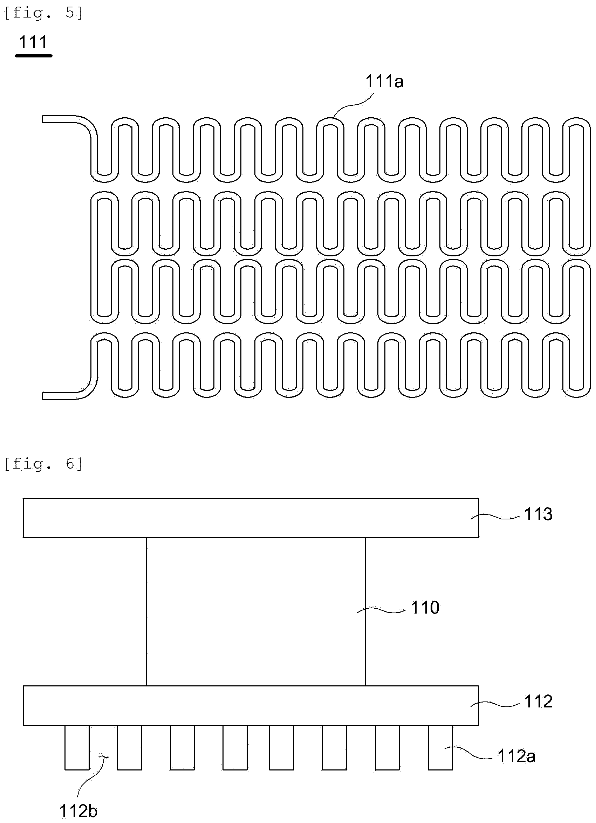

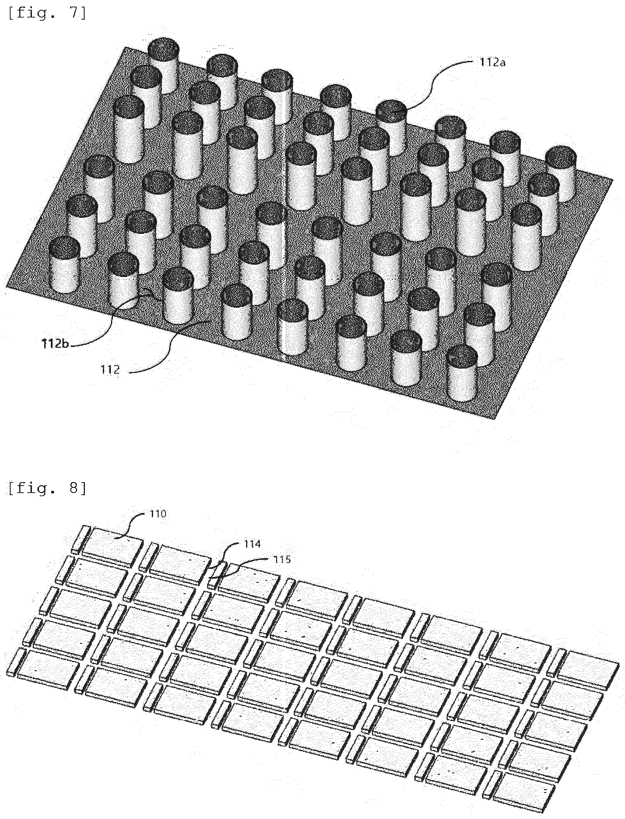

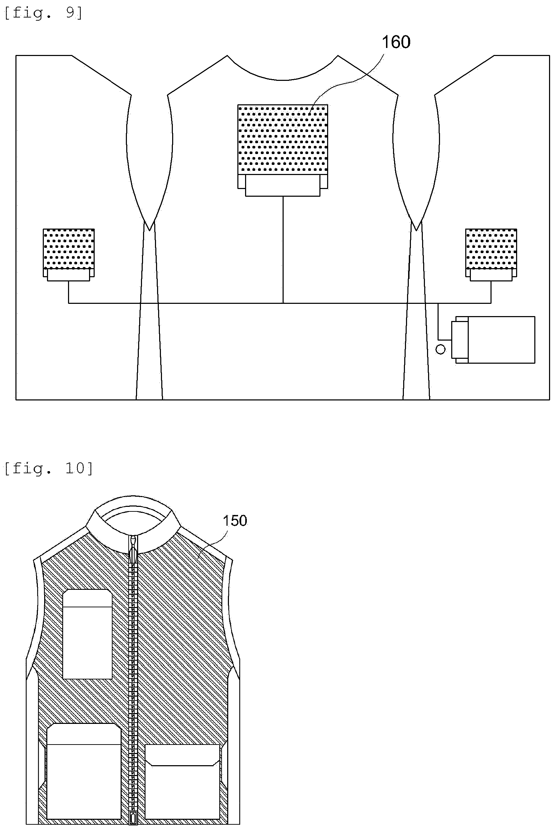

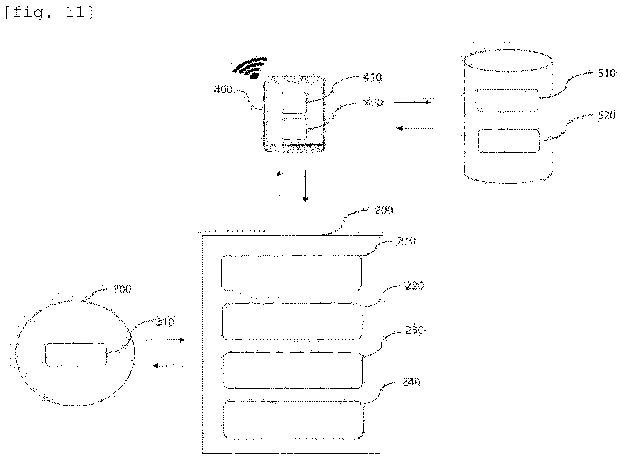

FIG. 1 is a view showing the entire configuration of an IoT-based cold vest according to a preferred embodiment of the present invention, FIGS. 2 and 3 are views showing a unit cooling module of the IoT-based cold vest according to a preferred embodiment of the present invention, FIGS. 4 and 5 are views showing a cooling channel of the IoT-based cold vest according to a preferred embodiment of the present invention, FIGS. 6 and 7 are views showing a first surface of the IoT-based cold vest according to a preferred embodiment of the present invention, FIG. 8 is a view showing a cold air inflow tube and a cold air outflow tube of the IoT-based cold vest according to a preferred embodiment of the present invention, FIGS. 9 and 10 are views showing a UV coating layer and heat discharge holes of the IoT-based cold vest according to a preferred embodiment of the present invention, and FIG. 11 is a view showing a controller, a temperature collector, a user terminal, and a server unit of the IoT-based cold vest according to a preferred embodiment of the present invention.

In an IoT-based cold vest related to the present invention, first, a clothing part 100 forming one or more cooling areas 130 with cold holders 120 in which a plurality of flexible unit cooling modules 110 is inserted is configured.

Further, a controller 200 that is detachably disposed on the clothing part 100, supplies electrical energy to the unit cooling modules 110, and has a communication module 220 to control the unit cooling modules 110 by transmitting first temperature adjustment information 210 to the unit cooling modules 110 is configured.

In this configuration, the unit cooling modules 110 and the controller 200 are configured to be attachable/detachable to/from the clothing part 100 so that the clothing part 100 can be washed.

In this configuration, a temperature collector 300 that is also detachably disposed on the clothing part 100, measures cooling temperature information 310, which is the body temperature of a wearer, and transmits the cooling temperature information 310 to the controller 200 is configured.

In this configuration, the temperature collector 300 may be integrally configured with the controller 200, and when several temperature collectors 300 are disposed for one controller 200, the temperature collectors are connected through wired connectors.

Further, a user terminal 400 that is connected to the communication module 220 through a network, collects the cooling temperature information 310, and transmits second temperature adjustment information 410 to the controller 200 to control the unit cooling modules 110 is configured. It is preferable that the user terminal 400 is a smartphone that a user can easily carry.

Further, a server unit 500 that is connected to the user terminal 400 through a network, collects and stores the cooling temperature information 310 and the first temperature adjustment information 210 in a database, and transmits third temperature adjustment information 510 to the user terminal 400 so that the unit cooling modules 110 are controlled is configured.

That is, the server unit 500 is configured to be able to transmit control information enabling the unit cooling modules 110 to be cooled by communicating with the controller 200 using the user terminal 400.

Further, a cooling channel 111 is formed in the unit cooling modules 110, cold air generated by a Peltier element 140 flows through the cooling channels 111, and a plurality of unit cooling modules 110 is configured to form one cooling area 130.

Meanwhile, the server unit 500 collects the cooling temperature information 310 of an individual wearer from the user terminal 400, is provided such that wearing position information 311, position information 312 of a plurality cooling portions, and portion-specific cooling information 313 are collected as the collected cooling temperature information 310 and the cooling states of respective parts of a human body are collected, and is configured to transmit the third temperature adjustment information 510 to the user terminal 400 on the basis of weather information 520, which includes the temperature, humidity, and wind information at the area where a wearer is positioned that are collected from an external weather system, and the cooling temperature information 310.

Further, the unit cooling module 110 is configured such that inflow tubes 141 guiding cold air generated by the Peltier element 140 into the cooling channel 111 are detachably connected to the cooling channel 111.

In this configuration, the cooling channel 111 is, as shown in FIGS. 4 and 5, formed by bending one tube and is repeatedly bent in S shapes from a side to the other side in the longitudinal going direction, whereby a line of unit cooling passages 111a is formed. Further, a plurality of unit cooling passages 111a is continuously formed with predetermined intervals from a side to the other side in a width direction to provide a cooling area unit.

In this configuration, the unit cooling passages 111a may be disposed in a direction parallel with a first direction, as shown in FIG. 4, or may be disposed in a direction parallel with a second direction, as shown in FIG. 5. In this configuration, the first direction is a direction parallel with the inflow tube 141 and the second direction is a direction perpendicular to the first direction.

Meanwhile, the unit cooling module 110 is configured such that a first surface 112 is formed toward the skin of a wearer under the cooling channel 11, a second surface 113 is disposed opposite to the first surface 112, the temperature collector 300 is disposed at the position of the first surface 112 at the position of an outlet hole of the cooling channel 111, a plurality of cylindrical cooling protrusions 112a is formed on the first surface 112, and many cooling gap spaces 112b that are perpendicular between a wearer and the first surface 112 are formed between the cooling protrusions 112a to form a gap from a skin or clothing.

In this configuration, the cold air inflow tube 114 and the cold air outflow tube 115 of a unit cooling module 110 adjacent to any one unit cooling module 110 are detachably connected to each other, whereby the cooling area 130 is formed by a plurality of unit cooling modules 110. The cold air inflow tube 114 and the cold air outflow tube 115 are made of a flexible material so that the cooling area 130 corresponds to a curve of a human body. A UV coating layer 150 is disposed on the surface of the clothing part 100 and fine heat discharge holes 160 are irregularly configured at the cold holder 120 to discharge heat that is discharged from a Peltier thermoelectric element 140, a human body, or the unit cooling modules 110.

In this configuration, a user input unit 230 and a temperature display unit 240 are disposed at the controller 200 such that when a user operates the user input unit 230, the first temperature adjustment information 210 is created as input information and the unit cooling modules 110 are controlled.

Further, the user terminal 400 is provided such that the cooling temperature information 310 is shown in an installed application 420 and is configured such that the second temperature adjustment information 410 is calculated as information that is input into the user input unit 230 by a user touching a screen.

The second temperature adjustment information 410 is calculated by the application 420 in consideration of temperature of collected cooling information, a variation rate of cooling information, and currently remaining electrical energy.

Further, the server unit 500 has a model trained to extract features and the possibility of a danger of skin temperature on the basis of the temperature difference between the center temperature of the front and the back of the body of a wearer and the portions around the front and back for learning data as an artificial intelligence model from which thermal pleasantness information of a human body is extracted on the basis of feature analysis of the portion-specific cooling information 313 to be able to transmit the third temperature adjustment information 510 suitable for a wearer.

Using the IoT-based cold vest of the present invention described above makes it possible to adjust temperature through both direct operation by a wearer and previous operation through a server using cooling temperature information of the wearer and weather information around the wearer, thereby being able to provide an effect of increasing work safety and wearing pleasantness, increase activity convenience for the wearer using the cooling members made of a flexible material that is convenient and light, and provide an effect of increasing convenience for washing through a detachable structure.

Preferred embodiments of the present invention were described above, but it would be understood by those skilled in the art that these embodiments described above are only examples of the present invention. Accordingly, the protective range of the present invention should be construed by those described in claims.

## Claims

1. An IoT-based cold vest comprising:
a clothing part (100) configured to form one or more cooling areas (130) with cold holders (120) in which a plurality of flexible unit cooling modules (110) is inserted;
a controller (200) detachably disposed on the clothing part (100), supplying electrical energy to the unit cooling modules (110), and having a communication module (220) to control the unit cooling modules (110) by transmitting first temperature adjustment information (210) to the unit cooling modules (110);
a temperature collector (300) configured to collect cooling temperature information (310) that is transmitted to the unit cooling modules (110);
a user terminal (400) connected to the communication module (220) through a network and configured to collect the cooling temperature information (310) and transmit second temperature adjustment information (410) to the controller (200) to control the unit cooling modules (110); and
a server unit connected to the user terminal (400) through a network and configured to collect the cooling temperature information (310) and the first temperature adjustment information (210) and transmit third temperature adjustment information (510) to the user terminal (400) so that the unit cooling modules (110) are controlled,
wherein the server unit is configured to collect the cooling temperature information (310) of an individual wearer from the user terminal (400), is configured such that wearing position information, position information of a plurality cooling portions, and portion-specific cooling information are collected as the collected cooling temperature information (310) and cooling states of respective parts of a human body are collected, and is configured to transmit the third temperature adjustment information (510) to the user terminal (400) on the basis of weather information, which includes temperature, humidity, and wind information at an area where a wearer is positioned that are collected from an external weather system, and the cooling temperature information (310).

2. The IoT-based cold vest of claim 1, wherein a cooling channel (111) is formed in the unit cooling modules (110), cold air generated by a Peltier element (140) flows through the cooling channels (111), and a plurality of unit cooling modules (110) is configured to form one cooling area (130).

3. The IoT-based cold vest of claim 2, wherein the unit cooling module (110) is configured such that inflow tubes (141) guiding cold air generated by the Peltier element (140) into the cooling channel (111) are detachably connected to the cooling channel (111); and
the cooling channel (111) is formed by bending one tube and is repeatedly bent in S shapes from a side to the other side in a longitudinal going direction, whereby a line of unit cooling passages (111a) is formed and the unit cooling passages (111a) are continuously formed with predetermined intervals from a side to the other side in a width direction to provide a cooling area unit.

4. The IoT-based cold vest of claim 3, wherein the unit cooling module (110) is configured such that a first surface (112) is formed toward the skin of a wearer under the cooling channel (111), a second surface (113) is disposed opposite to the first surface (112), the temperature collector (300) is disposed at the position of the first surface (112) at the position of an outlet hole of the cooling channel (111), a plurality of cylindrical cooling protrusions (112a) is formed on the first surface (112), and many cooling gap spaces (112b) that are perpendicular between a wearer and the first surface (112) are formed between the cooling protrusions (112a).

5. The IoT-based cold vest of claim 4, wherein a cold air inflow tube (114) and a cold air outflow tube (115) of the unit cooling module (110) adjacent to any one unit cooling module (110) are detachably connected to each other, whereby the cooling area (130) is formed by the unit cooling modules (110); and
the air inflow tube (114) and the cold air outflow tube (115) are made of a flexible material so that the cooling area (130) corresponds to a curve of a human body.

6. The IoT-based cold vest of claim 5, wherein a UV coating layer (150) is disposed on the surface of the clothing part (100) and fine heat discharge holes (160) are irregularly configured at the cold holder (120) to discharge heat that is discharged from the Peltier element (140), a human body, or the unit cooling modules (110).

7. The IoT-based cold vest of claim 6, wherein a user input unit (230) and a temperature display unit (240) are disposed at the controller (200) such that when a user operates the user input unit (230), the first temperature adjustment information (210) is created as input information and the unit cooling modules (110) are controlled.

8. The IoT-based cold vest of claim 7, wherein the user terminal (400) is configured such that the cooling temperature information (310) is shown in an installed application, and the second temperature adjustment information (410) is formed as information that is input into the user input unit (230) by a user touching a screen and cooling temperature of the unit cooling modules (110) is controlled.

9. The IoT-based cold vest of claim 8, wherein
the server unit has a model trained to extract features and the possibility of a danger of skin temperature on the basis of a temperature difference between center temperature of the front and the back of the body of a wearer and portions around the front and the back for learning data as an artificial intelligence model from which thermal pleasantness information of a human body is extracted on the basis of feature analysis of the portion-specific cooling information.

## Patentansprüche

1. loT-basierte Kühlweste, umfassend:
ein Bekleidungsstück (100), das so konfiguriert ist, dass es einen oder mehrere Kühlbereiche (130) mit Kühlhaltern (120) bildet, in die eine Mehrzahl von flexiblen Kühlmodul-Einheiten (110) eingesetzt ist;
eine Steuerung (200), die lösbar an dem Bekleidungsstück (100) angeordnet ist, die die Kühlmodul-Einheiten (110) mit elektrischer Energie versorgt und ein Kommunikationsmodul (220) aufweist, um die Kühlmodul-Einheiten (110) zu steuern, indem sie erste Temperaturanpassungsinformationen (210) an die Kühlmodul-Einheiten (110) überträgt;
einen Temperaturkollektor (300), der so konfiguriert ist, dass er Kühltemperaturinformationen (310) sammelt, die an die Kühlmodul-Einheiten (110) übertragen werden;
ein Benutzerterminal (400), das über ein Netzwerk mit dem Kommunikationsmodul (220) verbunden ist und so konfiguriert ist, dass es die Kühltemperaturinformationen (310) sammelt und zweite Temperaturanpassungsinformationen (410) an die Steuerung (200) überträgt, um die Kühlmodul-Einheiten (110) zu steuern; und
eine Servereinheit, die über ein Netzwerk mit dem Benutzerterminal (400) verbunden ist und so konfiguriert ist, dass sie die Kühltemperaturinformationen (310) und die ersten Temperaturanpassungsinformationen (210) sammelt und dritte Temperaturanpassungsinformationen (510) an das Benutzerterminal (400) überträgt, so dass die Kühlmodul-Einheiten (110) gesteuert werden, wobei die Servereinheit so konfiguriert ist, dass sie die Kühltemperaturinformationen (310) eines einzelnen Trägers von dem Benutzerterminal (400) sammelt, so konfiguriert ist, dass Tragepositionsinformationen, Positionsinformationen einer Mehrzahl von Kühlabschnitten und abschnittsspezifische Kühlinformationen als die gesammelten Kühltemperaturinformationen (310) gesammelt werden und Kühlzustände jeweiliger Teile eines menschlichen Körpers gesammelt werden, und so konfiguriert ist, dass sie die dritten Temperaturanpassungsinformationen (510) an das Benutzerterminal (400) auf der Basis von Wetterinformationen, die Temperatur-, Feuchtigkeits- und Windinformationen in einem Bereich umfassen, in dem sich ein Träger befindet, und die von einem externen Wettersystem gesammelt werden, und der Kühltemperaturinformationen (310) zu übertragen.

2. loT-basierte Kühlweste nach Anspruch 1, wobei in den Kühlmodul-Einheiten (110) ein Kühlkanal (111) ausgebildet ist, von einem Peltier-Element (140) erzeugte Kaltluft durch die Kühlkanäle (111) strömt und eine Mehrzahl von Kühlmodul-Einheiten (110) so konfiguriert ist, dass sie einen Kühlbereich (130) bilden.

3. loT-basierte Kühlweste nach Anspruch 2, wobei die Kühlmodul-Einheit (110) so konfiguriert ist, dass Einlassschläuche (141), die die von dem Peltier-Element (140) erzeugte Kaltluft in den Kühlkanal (111) leiten, lösbar mit dem Kühlkanal (111) verbunden sind; und
der Kühlkanal (111) durch Biegen eines Schlauchs ausgebildet ist und in Längsrichtung von einer Seite zur anderen Seite wiederholt S-förmig gebogen ist, wodurch eine Reihe von Kühlpassage-Einheiten (111a) gebildet wird und wobei die Kühlpassage-Einheiten (111a) in Breitenrichtung in vorgegebenen Abständen von einer Seite zur anderen Seite kontinuierlich ausgebildet sind, um eine Kühlbereichseinheit bereitzustellen.

4. loT-basierte Kühlweste nach Anspruch 3, wobei die Kühlmodul-Einheit (110) so konfiguriert ist, dass eine erste Oberfläche (112) in Richtung der Haut eines Trägers unterhalb des Kühlkanals (111) ausgebildet ist, eine zweite Oberfläche (113) der ersten Oberfläche (112) gegenüberliegend angeordnet ist, der Temperaturkollektor (300) an der Position der ersten Oberfläche (112) an der Position eines Auslasslochs des Kühlkanals (111) angeordnet ist, eine Mehrzahl von zylindrischen Kühlvorsprüngen (112a) auf der ersten Oberfläche (112) ausgebildet ist und eine Vielzahl von Kühlzwischenräumen (112b), die senkrecht zwischen einem Träger und der ersten Oberfläche (112) verlaufen, zwischen den Kühlvorsprüngen (112a) ausgebildet ist.

5. loT-basierte Kühlweste nach Anspruch 4, wobei ein Kaltlufteinlassschlauch (114) und ein Kaltluftauslassschlauch (115) der an eine beliebige Kühlmodul-Einheit (110) angrenzenden Kühlmodul-Einheit (110) lösbar miteinander verbunden sind, wodurch der Kühlbereich (130) durch die Kühlmodul-Einheiten (110) gebildet wird; und
der Lufteinlassschlauch (114) und der Kaltluftauslassschlauch (115) aus einem flexiblen Material bestehen, so dass der Kühlbereich (130) der Krümmung eines menschlichen Körpers entspricht.

6. loT-basierte Kühlweste nach Anspruch 5, wobei auf der Oberfläche des Bekleidungsstücks (100) eine UV-Beschichtungsschicht (150) angeordnet ist und an dem Kühlhalter (120) feine Wärmeabfuhrlöcher (160) unregelmäßig angeordnet sind, um Wärme abzuführen, die von dem Peltier-Element (140), einem menschlichen Körper oder den Kühlmodul-Einheiten (110) abgegeben wird.

7. loT-basierte Kühlweste nach Anspruch 6, wobei eine Benutzereingabeeinheit (230) und eine Temperaturanzeigeeinheit (240) an der Steuerung (200) so angeordnet sind, dass bei Betätigung der Benutzereingabeeinheit (230) durch einen Benutzer die ersten Temperaturanpassungsinformationen (210) als Eingabeinformationen erzeugt werden und die Kühlmodul-Einheiten (110) gesteuert werden.

8. loT-basierte Kühlweste nach Anspruch 7, wobei das Benutzerterminal (400) so konfiguriert ist, dass die Kühltemperaturinformationen (310) in einer installierten Anwendung angezeigt werden und die zweiten Temperaturanpassungsinformationen (410) als Informationen erstellt werden, die durch Berühren eines Bildschirms durch einen Benutzer in die Benutzereingabeeinheit (230) eingegeben werden, und die Kühltemperatur der Kühlmodul-Einheiten (110) gesteuert wird.

9. loT-basierte Kühlweste nach Anspruch 8, wobei
die Servereinheit ein Modell aufweist, das so trainiert ist, dass es Merkmale und die Möglichkeit einer Gefahr hinsichtlich der Hauttemperatur auf der Basis eines Temperaturunterschieds zwischen der zentralen Temperatur der Vorderseite und der Rückseite des Körpers eines Trägers und Abschnitten um die Vorderseite und die Rückseite herum für Lerndaten als Modell der künstlichen Intelligenz extrahiert, aus dem auf der Basis einer Merkmalanalyse der abschnittsspezifischen Kühlinformationen Informationen zum thermischen Wohlbefinden eines menschlichen Körpers extrahiert werden.

## Revendications

1. Gilet réfrigérant basé sur l'IoT, comprenant :
une partie de vêtement (100) prévue pour former une ou plusieurs zones de rafraîchissement (130) avec des supports froids (120) dans lesquels est insérée une pluralité de modules de rafraîchissement unitaires flexibles (110) ;
un contrôleur (200) disposé de manière amovible sur la partie de vêtement (100), fournissant de l'énergie électrique aux modules de rafraîchissement unitaires (110), et comportant un module de communication (220) pour commander les modules de rafraîchissement unitaires (110) par transmission de premières informations de réglage de température (210) aux modules de rafraîchissement unitaires (110) ;
un collecteur de température (300) prévu pour collecter des informations de température de rafraîchissement (310) transmises aux modules de rafraîchissement unitaires (110) ;
un terminal d'utilisateur (400) connecté au module de communication (220) via un réseau et prévu pour collecter les informations de température de rafraîchissement (310) et transmettre des deuxièmes informations de réglage de température (410) au contrôleur (200) afin de commander les modules de rafraîchissement unitaires (110) ; et
une unité de serveur connectée au terminal d'utilisateur (400) via un réseau et prévue pour collecter les informations de température de rafraîchissement (310) et les premières informations de réglage de température (210), et transmettre des troisièmes informations de réglage de température (510) au terminal d'utilisateur (400) de sorte que les modules de rafraîchissement unitaires (110) sont commandés,
où l'unité de serveur est prévue pour collecter les informations de température de rafraîchissement (310) d'un porteur individuel à partir du terminal d'utilisateur (400), est prévue de sorte que des informations d'emplacement d'utilisation, des informations d'emplacement d'une pluralité de parties de rafraîchissement, et des informations de rafraîchissement spécifiques à une partie sont collectées en tant qu'informations de température de rafraîchissement collectées (310), et des états de rafraîchissement de parties respectives d'un corps humain sont collectés, et est prévue pour transmettre les troisièmes informations de réglage de température (510) au terminal d'utilisateur (400) sur la base d'informations météorologiques comprenant des informations de température, d'humidité et de vent dans une zone où est situé un utilisateur, provenant d'un système météorologique externe, et les informations de température de rafraîchissement (310).

2. Gilet réfrigérant basé sur l'IoT selon la revendication 1, où un canal de rafraîchissement (111) est formé dans les modules de rafraîchissement unitaires (110), de l'air froid généré par un élément Peltier (140) circule dans les canaux de rafraîchissement (111), et une pluralité de modules de rafraîchissement unitaires (110) est prévue pour former une zone de rafraîchissement (130).

3. Gilet réfrigérant basé sur l'IoT selon la revendication 2, où le module de rafraîchissement unitaire (110) est prévu de sorte que des tubes d'admission (141) guidant l'air froid généré par l'élément Peltier (140) dans le canal de rafraîchissement (111) sont raccordés de manière amovible au canal de rafraîchissement (111) ; et
le canal de rafraîchissement (111) est formé par pliage d'un tube, et est plié de manière répétée en forme de S d'un côté à l'autre côté dans le sens de la longueur, une ligne de passages de rafraîchissement unitaires (111a) étant ainsi formée, et les passages de rafraîchissement unitaires (111a) étant formés de manière continue à des intervalles prédéterminés d'un côté à l'autre côté dans le sens de la largeur pour former une unité de zone de rafraîchissement.

4. Gilet réfrigérant basé sur l'IoT selon la revendication 3, où le module de rafraîchissement unitaire (110) est prévu de sorte qu'une première surface (112) est formée vers la peau d'un porteur sous le canal de rafraîchissement (111), une deuxième surface (113) est disposée à l'opposé de la première surface (112), le collecteur de température (300) est disposé à l'emplacement de la première surface (112) à l'endroit d'un trou de sortie du canal de rafraîchissement (111), une pluralité de saillies de rafraîchissement cylindriques (112a) est formée sur la première surface (112), et de nombreux interstices de rafraîchissement (112b) perpendiculaires entre un porteur et la première surface (112) sont formés entre les saillies de rafraîchissement (112a).

5. Gilet réfrigérant basé sur l'IoT selon la revendication 4, où un tube d'admission d'air froid (114) et un tube de sortie d'air froid (115) du module de rafraîchissement unitaire (110) adjacents à un module de rafraîchissement unitaire (110) quelconque sont raccordés l'un à l'autre de manière amovible, la zone de rafraîchissement (130) étant ainsi formée par les modules de rafraîchissement unitaires (110) ; et
le tube d'admission d'air (114) et le tube de sortie d'air froid (115) sont constitués d'un matériau flexible, de sorte que la zone de rafraîchissement (130) correspond à une courbe d'un corps humain.

6. Gilet réfrigérant basé sur l'IoT selon la revendication 5, où une couche de revêtement UV (150) est disposée sur la surface de la partie de vêtement (100) et des trous fins d'évacuation de chaleur (160) sont prévus de manière irrégulière sur le support de froid (120) pour évacuer la chaleur refoulée de l'élément Peltier (140), d'un corps humain ou des modules de rafraîchissement unitaires (110).

7. Gilet réfrigérant basé sur l'IoT selon la revendication 6, où une unité d'entrée d'utilisateur (230) et une unité d'affichage de température (240) sont disposées sur le contrôleur (200), de sorte que, lorsqu'un utilisateur active l'unité d'entrée d'utilisateur (230), les premières informations de réglage de température (210) sont créées en tant qu'informations d'admission et les modules de rafraîchissement unitaires (110) sont commandés.

8. Gilet réfrigérant basé sur l'IoT selon la revendication 7, où le terminal d'utilisateur (400) est prévu de sorte que les informations de température de rafraîchissement (310) sont affichées dans une application installée, et les deuxièmes informations de réglage de température (410) sont formées en tant qu'informations entrées dans l'unité d'entrée d'utilisateur (230) par un utilisateur touchant un écran, et la température de rafraîchissement des modules de rafraîchissement unitaires (110) est commandée.

9. Gilet réfrigérant basé sur l'IoT selon la revendication 8, où
l'unité de serveur présente un modèle entraîné à extraire des caractéristiques et la possibilité d'un risque de température cutanée, sur la base d'une différence de température entre la température centrale de l'avant et de l'arrière du corps d'un porteur et des parties autour de l'avant et de l'arrière, pour apprendre des données en tant que modèle d'intelligence artificielle dont sont extraites des informations sur le confort thermique d'un corps humain sur la base d'une analyse de caractéristiques des informations de rafraîchissement spécifiques à une partie.
